# EUROPEAN PATENT APPLICATION

(11) **EP 4 794 219 A1**
(43) Date of publication of application: **19.08.2026**
(21) Application number: 24896153.4
(22) Date of filing: 30.10.2024
(51) Int. Cl.: H04B 7/06, H04L 1/06

(54) **BEAM MANAGEMENT METHOD, AND APPARATUS**

(30) Priority: 29.11.2023 CN 202311622758
(71) Applicant: HUAWEI TECHNOLOGIES CO., LTD., Shenzhen, Guangdong 518129 (CN)
(72) Inventor: WANG, Xiaona, Shenzhen, Guangdong 518129 (CN); LIU, Fengwei, Shenzhen, Guangdong 518129 (CN); FAN, Bo, Shenzhen, Guangdong 518129 (CN)
(74) Representative: Gill Jennings & Every LLP
(86) International application number: PCT/CN2024/128458
(87) International publication number: WO 2025/113062

(57) **Abstract**

This application discloses a beam management method and an apparatus, relating to the field of communication technologies. The method includes: sending, by a network device, M pilot groups to a terminal device, where each pilot group corresponds to a plurality of pilot resources or a plurality of pilot ports, and M is a positive integer; and obtaining, by the network device, a measurement value and an index value for at least one of the M pilot groups, where the measurement value represents channel state information of the pilot group, and the index value represents a pilot resource or a pilot port associated with the measurement value. In this application, after the network device sends a plurality of pilot groups to the terminal device, the terminal device calculates a measurement value of each pilot group and then reports a measurement value corresponding to at least one pilot group to the network device. Since analog beams of different pilot groups are different, measurement and reporting for different analog beams can be implemented, thereby enabling the terminal device to sense different analog beams and improving the communication performance of the multi-user system.

## Description

This application claims priority to Chinese Patent Application No. 202311622758.4, filed with the China National Intellectual Property Administration on November 29, 2023 and entitled "BEAM MANAGEMENT METHOD AND APPARATUS", which is incorporated herein by reference in its entirety.

### TECHNICAL FIELD

This application relates to the field of communication technologies, and in particular, to a beam management method and an apparatus.

### BACKGROUND

In current 5th generation mobile communication technology (5th generation mobile communication technology, 5G) and future 5G+/6G systems, signal attenuation and energy loss at medium and high frequency bands (for example, 6 GHz or 28 GHz) are addressed by using larger antenna arrays. By weighting the antenna array, signal energy is concentrated in a narrow angle range, forming a directional beam.

As a quantity of communication signals increases, antennas transmit more beams, exceeding the processing capabilities of base stations. To address this, hybrid beamforming (hybrid beamforming, HBF) is introduced. However, HBF-based transmission may degrade the performance of the multi-user system.

### SUMMARY

This application provides a beam management method and an apparatus to implement analog beam measurement, selection, and reporting in a hybrid beam architecture.

Technical solutions are as follows.

According to a first aspect, an embodiment of this application provides a beam management method. The method includes: A network device sends M pilot groups to a terminal device, where each of the M pilot groups corresponds to a plurality of pilot resources or a plurality of pilot ports, and M is a positive integer. The network device obtains a measurement value and an index value of at least one of the M pilot groups. The measurement value represents channel state information of the pilot group, and the index value represents a pilot resource or a pilot port associated with the measurement value.

One pilot group corresponds to one analog beam, or corresponds to a plurality of digital beams of one analog beam.

In a possible embodiment, the pilot group may be a pilot resource set group or a pilot resource group. When the pilot group is a pilot resource set group, each pilot group corresponds to a plurality of pilot resources. When the pilot group is a pilot port group, each pilot group corresponds to a plurality of pilot ports.

In an example, the network device configures a plurality of pilot resource sets for the terminal device, where each pilot resource set corresponds to one or more pilot resources. Pilots included in different pilot resource sets are sent by using different analog domain weights and a same digital domain weight or different digital domain weights. In other words, different pilot resource sets correspond to different analog beams. In one or more pilot resources in a same pilot resource set, pilots included in each pilot resource are sent by using a same analog domain weight and different digital domain weights. In other words, different pilot resources in the same pilot resource set correspond to a same analog beam and different digital beams.

In an example, the network device configures one pilot resource set including a plurality of pilot resources for the terminal device, where each pilot resource corresponds to a plurality of pilot ports. Pilots included in different pilot resources are sent by using different analog domain weights and a same digital domain weight or different digital domain weights. In other words, different pilot resources correspond to different analog beams. In one or more pilot ports in a same pilot resource, pilots included in each pilot port are sent by using a same analog domain weight and different digital domain weights. In other words, different pilot ports in the same pilot resource correspond to a same analog beam and different digital beams.

In this application, the network device sends a plurality of pilot groups to the terminal device, where different pilot groups correspond to different analog beams, and each of the plurality of pilot groups corresponds to a plurality of pilot resources or a plurality of pilot ports. The terminal device calculates a measurement value for each pilot group and reports the measurement value corresponding to each pilot group to the network device. Since analog beams of different pilot groups are different, measurement and reporting of different analog beams can be implemented, thereby enabling the terminal device to sense different analog beams and improving the communication performance of the multi-user system.

In a possible implementation of this application, each index value is associated with one or more measurement values, or a plurality of index values are associated with one measurement value.

In a possible implementation of this application, when each pilot group corresponds to the plurality of pilot resources, obtaining the measurement value corresponding to each pilot group includes: The network device obtains a measurement value of each of the plurality of pilot resources corresponding to each pilot group.

In a possible implementation of this application, the measurement value corresponding to each pilot group includes one or more of the following: an average value or a maximum value of measurement values of the plurality of pilot resources; or an average value or a sum of first N measurement values among measurement values of the plurality of pilot resources as sorted in a preset order, where N is a positive integer.

The preset order may be a descending order, an ascending order, or another arrangement order. This is not limited in embodiments of this application.

In a possible implementation of this application, when each pilot group corresponds to the plurality of pilot ports, obtaining the measurement value corresponding to each pilot group includes: The network device obtains a measurement value of each of the plurality of pilot ports corresponding to each pilot group.

In a possible implementation of this application, the measurement value corresponding to each pilot group includes one or more of the following: an average value or a maximum value of measurement values of the plurality of pilot ports; or an average value or a sum of first N measurement values among measurement values of the plurality of pilot ports as sorted in a preset order, where N is a positive integer.

The preset order may be a descending order, an ascending order, or another arrangement order. This is not limited in embodiments of this application.

In a possible implementation of this application, when the pilot group corresponds to L pilot ports, and L is an even number, that every two pilot ports form one group includes: A k^{th} pilot port and a (k+N/2)^{th} pilot port correspond to one group, where k is a positive integer; or a k^{th} pilot port and a (k+1)^{th} pilot port correspond to one group, where k is an odd number.

In a possible implementation of this application, the method provided in this embodiment of this application further includes: The network device sends spatial domain reception indication information of a downlink signal to the terminal device, where the spatial domain reception indication information is associated with the at least one pilot group.

In a possible implementation of this application, the indication information includes a local index, and the local index indicates a pilot group referenced for spatial domain reception of the downlink signal.

According to a second aspect, an embodiment of this application provides a beam management method. The method includes: A terminal device receives M pilot groups from a network device, where each of the M pilot groups corresponds to a plurality of pilot resources or a plurality of pilot ports, and M is a positive integer. The terminal device determines a measurement value of at least one of the M pilot groups. The measurement value represents channel state information of the pilot group. The terminal device reports the measurement value and an index value of the at least one of the M pilot groups to the network device. The index value represents a pilot resource or a pilot port associated with the measurement value.

In a possible implementation of this application, each index value is associated with one or more measurement values, or a plurality of index values are associated with one measurement value.

In a possible implementation of this application, when each pilot group corresponds to the plurality of pilot resources, obtaining the measurement value of each pilot group includes: The terminal device determines a measurement value of each of the plurality of pilot resources corresponding to each pilot group.

In a possible implementation of this application, the measurement value corresponding to each pilot group includes one or more of the following: an average value or a maximum value of measurement values of the plurality of pilot resources; or an average value or a sum of first N measurement values among measurement values of the plurality of pilot resources as sorted in a preset order, where N is a positive integer.

In a possible implementation of this application, when each pilot group corresponds to the plurality of pilot ports, determining the measurement value of each pilot group includes: The terminal device determines a measurement value of each of the plurality of pilot ports corresponding to each pilot group.

In a possible implementation of this application, the measurement value corresponding to each pilot group includes one or more of the following: an average value or a maximum value of measurement values of the plurality of pilot ports; or an average value or a sum of first N largest measurement values among measurement values of the plurality of pilot ports, where N is a positive integer.

In a possible implementation of this application, when the pilot group corresponds to L pilot ports, and L is an even number, that every two pilot ports form one group includes: A k^{th} pilot port and a (k+N/2)^{th} pilot port correspond to one group, where k is a positive integer; or a k^{th} pilot port and a (k+1)^{th} pilot port correspond to one group, where k is an odd number.

In a possible implementation of this application, the method provided in this embodiment of this application further includes: The terminal device obtains spatial domain reception indication information of a downlink signal, where the spatial domain reception indication information is associated with the at least one pilot group.

In a possible implementation of this application, the spatial domain reception indication information includes a local index, and the local index indicates a pilot group referenced for spatial domain reception of the downlink signal.

According to a third aspect, an embodiment of this application provides a beam management apparatus. The apparatus includes a transceiver, a memory, a processor, and a computer program that is stored in the memory and that is runnable on the processor. When the processor executes the computer program, the apparatus is configured to implement the beam management method described in the first aspect or the possible implementations of the first aspect or the beam management method described in the second aspect or the possible implementations of the second aspect.

According to a fourth aspect, an embodiment of this application provides a chip. The chip includes a processor and a communication interface, the communication interface is coupled to the processor, and the processor is configured to run a computer program or instructions, to implement the beam management method described in the first aspect or the possible implementations of the first aspect or the beam management method described in the second aspect or the possible implementations of the second aspect.

The communication interface is configured to communicate with a module other than the chip.

According to a fifth aspect, an embodiment of this application provides a computer-readable storage medium, including computer instructions. When the computer instructions are run on a communication device, the communication device performs the beam management method described in the first aspect or the possible implementations of the first aspect, or the beam management method described in the second aspect or the possible implementations of the second aspect.

According to a sixth aspect, an embodiment of this application provides a computer program product including instructions. When the instructions are run on a computer, the computer is enabled to perform the beam management method described in the first aspect or the possible implementations of the first aspect, or the beam management method described in the second aspect or the possible implementations of the second aspect.

According to a seventh aspect, an embodiment of this application provides a communication apparatus. The communication apparatus includes a processor and a storage medium. The storage medium stores instructions. When the instructions are run by the processor, the beam management method described in the first aspect or the possible implementations of the first aspect, or the beam management method described in the second aspect or the possible implementations of the second aspect is implemented.

According to an eighth aspect, an embodiment of this application provides a communication apparatus, including at least one processor. The at least one processor is coupled to a memory, the memory is configured to store a computer program or instructions, and the at least one processor is configured to execute the computer program or the instructions in the memory, so that the communication apparatus performs the beam management method described in the first aspect or the possible implementations of the first aspect, or the beam management method described in the second aspect or the possible implementations of the second aspect.

Optionally, the communication apparatus described in the eighth aspect further includes a memory.

According to a ninth aspect, an embodiment of this application provides a communication apparatus. The communication apparatus includes one or more modules, configured to: implement the method according to the first aspect, where the one or more modules may correspond to the steps in the method according to the first aspect; or implement the method according to the second aspect, where the one or more modules may correspond to the steps in the method according to the second aspect.

Any apparatus, computer storage medium, computer program product, chip, or communication system provided above is configured to perform the corresponding method provided above. Therefore, for beneficial effect that can be achieved, refer to the beneficial effect of the corresponding solution in the corresponding method provided above. Details are not described herein again.

### BRIEF DESCRIPTION OF DRAWINGS

FIG. 1a and FIG. 1b each are a diagram of an architecture of a communication system according to this application;
FIG. 2 is a diagram of a network element structure of a communication device according to this application;
FIG. 3 is a diagram of a beam management method according to an embodiment of this application;
FIG. 4 is a diagram of a structure of a MAC-CE according to an embodiment of this application;
FIG. 5 is a block diagram of a terminal device according to an embodiment of this application;
FIG. 6 is a block diagram of a network device according to an embodiment of this application; and
FIG. 7 is a diagram of a structure of a chip according to an embodiment of this application.

### DESCRIPTION OF EMBODIMENTS

For ease of describing the technical solutions in embodiments of this application clearly, in embodiments of this application, words such as "first" and "second" are used to distinguish same or similar items with a basically same function and role. For example, a first valid signal and a second valid signal are merely used to distinguish between different valid signals, and an order of the first valid signal and the second valid signal is not limited. A person skilled in the art may understand that the words such as "first" and "second" do not limit a quantity and an execution order, and the words such as "first" and "second" are not limited to be necessarily different.

It should be noted that, in this application, words such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

In this application, "at least one" refers to one or more, and "a plurality of" refers to two or more. "And/or" describes an association relationship between associated objects, and represents that three relationships may exist. For example, A and/or B may represent the following cases: Only A exists, both A and B exist, and only B exists, where A and B may be singular or plural. A character "/" usually indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

The technical solutions in this application may be applied to various communication systems, for example, a long term evolution (long time evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a public land mobile network (public land mobile network, PLMN) system, a device-to-device (device-to-device, D2D) network system, a machine-to-machine (machine-to-machine, M2M) network system, and a future 5th generation mobile communication technology (5th Generation Mobile Communication Technology, 5G) network system.

Network architectures and service scenarios described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to similar technical problems as a network architecture evolves and a new service scenario emerges. Embodiments of this application are described by using an example in which a provided method is applied to a new radio (new radio, NR) system or a 5G network.

Before embodiments of this application are described, related terms in embodiments of this application are first explained as follows.
(1) Beam (wave beam): refers to a signal, similar to a light beam, that is formed by performing weighting processing on an antenna array on a base station side or a terminal side and concentrating signal energy in a small angle range.
(2) Transmission configuration index (transmission configuration index, TCI): indicates related information of a downlink beam in downlink control information (downlink control information, DCI).
(3) Spatial relation (spatial relation): indicates related information of an uplink beam.

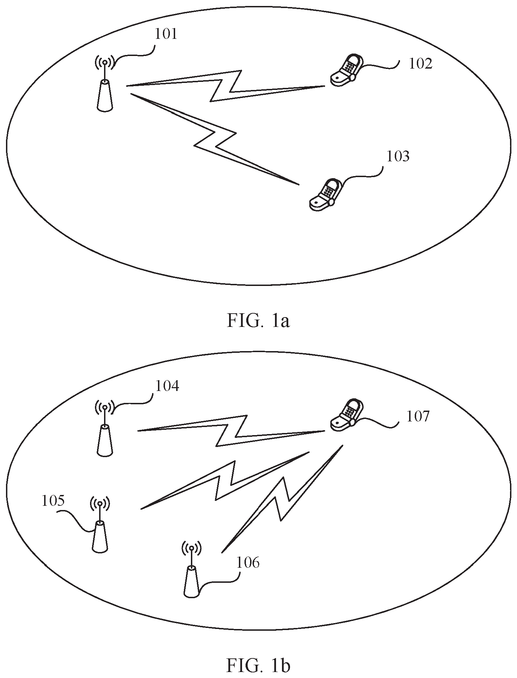

FIG. 1a and FIG. 1b each show a communication system according to an embodiment of this application. The communication system includes one or more network devices and one or more terminal devices. For example, in FIG. 1a, a plurality of terminal devices (such as a terminal 102 and a terminal 103) communicate with one network device (for example, a base station 101), and in FIG. 1b, one terminal device (for example, a terminal 107) communicates with a plurality of network devices (such as a base station 104, a base station 105, and a base station 106).

Communication between the network device and the terminal device needs to be performed by using the beam. A representation of the beam in NR may be a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi co-location (Quasi co-location, QCL) information, a QCL assumption, a QCL indication, or the like, and the beam may be indicated by a TCI-state (TCI-state) parameter or a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI-state, the spatial relation, or the like.

It may be understood that the beam may alternatively be another term indicating a beam, and this is not limited in this application.

The network device needs to send data information by using a transmission beam (transmission beam, Tx beam), and the terminal device needs to receive the data information by using a reception beam (reception beam, Rx beam).

The transmission beam is signal strength distribution formed in different spatial directions after a signal is transmitted through an antenna, and is used to send the signal. The transmission beam may alternatively be a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting), and a downlink beam may be indicated by a TCI-state parameter.

The reception beam may be signal strength distribution of a radio signal received from an antenna in different spatial directions, and is used to receive the signal. The reception beam may alternatively be a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting), and an uplink beam may be indicated by a spatial relation, an uplink TCI-state, or a sounding reference signal (sounding reference signal, SRS) resource.

In this application, the beam may be a wide beam, a narrow beam, or another type of beam. A technology for forming a beam may be a beamforming technology (for example, a digital beamforming technology, an analog beamforming technology, or a hybrid digital/analog beamforming technology), or another technology.

In an application scenario, in a process of downlink transmission between the network device and the terminal device, a transmission beam used by the network device is determined by the network device, and a reception beam used by the terminal device is determined by the terminal device based on a notification of the network device.

In an example, as shown in FIG. 1a, the base station 101 sends downlink control information (downlink control information, DCI) signaling to the terminal 102, where the DCI signaling includes a TCI field, and the TCI field indicates a TCI-state. The TCI-state includes a target reference signal resource (also referred to as a pilot resource). In the downlink transmission process in which the TCI-state is used, the terminal 102 performs receiving by using a reception beam corresponding to the pilot resource. The reception beam corresponding to the pilot resource is known by the terminal 102 in advance. For example, the terminal 102 may obtain the reception beam by measuring the pilot resource.

In another example, in a process of uplink transmission between the network device and the terminal device, based on the TCI-state, the terminal 102 may send data by using a transmission beam corresponding to the target reference signal resource, or send data by using a reception beam corresponding to the target reference signal resource.

In the process of communication between the network device and the terminal device, the network device may indicate beams of a plurality of different channels and/or reference signals to the terminal device, or may indicate one beam to the terminal device, where the beam is used for a plurality of channels and/or reference signals, and is referred to as a common beam. It should be noted that the common beam is merely for ease of description in embodiments of this application, and may alternatively have another name. This is not limited in this application.

In an example, the network device may indicate one uplink common beam for the terminal device, to transmit a plurality of uplink channels and/or uplink reference signals; or the network device may indicate one downlink common beam for the terminal device, to transmit a plurality of downlink channels and/or downlink reference signals; or the network device may indicate one uplink and downlink common beam for the terminal device, to transmit a plurality of uplink channels and/or uplink reference signals, and a plurality of downlink channels and/or downlink reference signals.

The terminal device in embodiments of this application is a device having a wireless communication function. The terminal device is also referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a wireless terminal in self driving (self driving), a wireless terminal in a remote surgery (remote medical surgery), a wireless terminal in a smart grid (smart grid), a wireless terminal in transportation safety (transportation safety), a wireless terminal in a smart city (smart city), a wireless terminal in a smart home (smart home) (for example, a refrigerator, a television, an air conditioner, or an electric meter), and the like.

The network device in embodiments of this application is an entity that may cooperate with the terminal device to transmit or receive signals. The network device may be any device having a wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission point, TP), a transmission reception point (transmission reception point, TRP), a gNB or a transmission point (TRP or TP) in a 5G like an NR system, one antenna panel or a group of antenna panels (including a plurality of antenna panels) of a base station in a 5G system, or a network node that forms a gNB or a transmission point, for example, a baseband unit (BBU) or a distributed unit (distributed unit, DU).

It should be understood that the network device and the terminal device in embodiments of this application may be deployed on land, including indoor or outdoor, handheld or vehicle-mounted; or deployed on water; or deployed on an airplane, a balloon, or a satellite in air. Application scenarios of the network device and the terminal device are not limited in embodiments of this application.

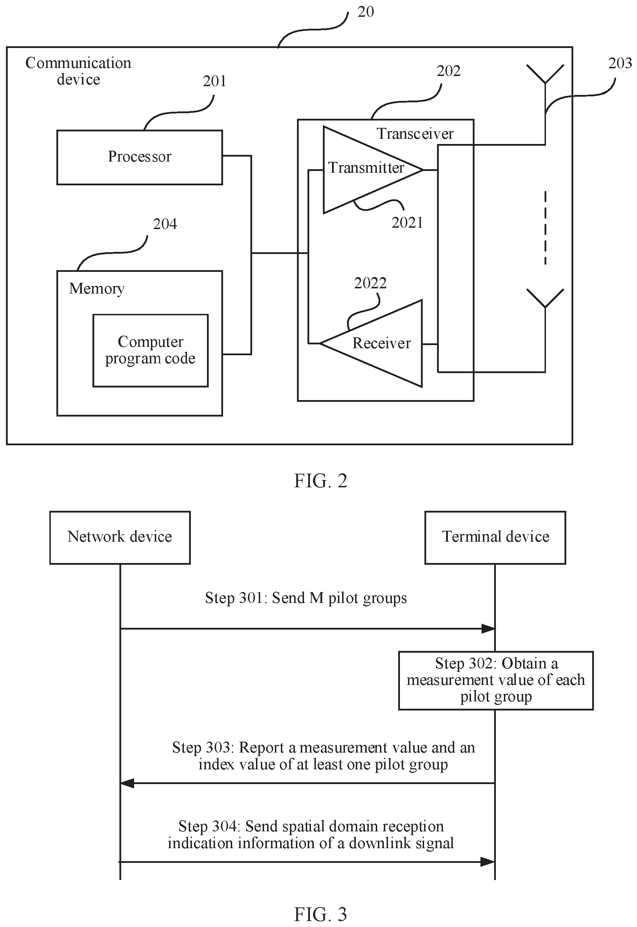

FIG. 2 is a diagram of a network element structure of a communication device according to an embodiment of this application. For network element structures of the terminal device and the network device in embodiments of this application, refer to the structure shown in FIG. 2. The communication device includes a processor 201, a communication line, at least one transceiver 202, and an antenna 203.

The processor 201 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line may include a channel for transmitting information between the foregoing components.

The transceiver 202, using any type of apparatus like a transceiver, is configured to communicate with another device or a communication network, for example, an Ethernet, a radio access network (radio access network, RAN), a wireless local area network (wireless local area network, WLAN).

The transceiver 202 includes a transmitter 2021 and a receiver 2022. The transmitter 2021 is connected to the antenna 203, and the receiver 2022 is connected to the antenna 203.

Optionally, the communication device may further include a memory 204.

The memory 204 may be a read-only memory (read-only memory, ROM), another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in a form of an instruction or a data structure and that can be accessed by a computer, but not limited thereto. The memory 204 may exist independently, and is connected to the processor 201 through the communication line. The memory 204 may be alternatively integrated with the processor 201.

The memory 204 is configured to store computer-executable instructions for performing the solutions in this application, and the processor 201 controls execution. The processor 201 is configured to execute the computer-executable instructions stored in the memory 204, to implement a method provided in the following embodiments of this application.

Optionally, the computer-executable instructions in this embodiment of this application may also be referred to as application program code. This is not specifically limited in embodiments of this application.

During specific implementation, in an embodiment, the processor 201 may include one or more CPUs.

During specific implementation, in an embodiment, the communication device may include a plurality of processors, and each of the processors may be a single-core (single-CPU) processor, or may be a multi-core (multi-CPU) processor. The processor herein may be one or more devices, circuits, and/or processing cores configured to process data (for example, computer program instructions).

The antenna 203 is usually located on an antenna panel (panel), and one antenna panel has one or more antennas. One or more antennas are arranged into an antenna array, to perform beamforming to form an analog beam. The antenna array may generate a plurality of analog beams in different directions.

During specific implementation, the terminal device may be equipped with a plurality of antenna panels, and the plurality of antenna panels are distributed at different locations and face different directions, to ensure that at least one antenna panel faces the network device regardless of a direction of the terminal device, so as to perform data transmission with the network device.

Optionally, the terminal device may enable all antenna panels for transmission at the same time, or may use only one antenna panel for transmission at a time. Whether the antenna panel of the terminal device is in an enabled state or a disabled state usually needs to be notified to the network device.

In this embodiment of this application, the antenna panel may be alternatively represented in another manner. For example, the antenna panel may be represented by an antenna port (for example, a channel state information reference signal (channel state information reference signal, CSI-RS) port, a sounding reference signal (sounding reference signal, SRS) port, a demodulation reference signal (demodulation reference signal, DMRS) port, a phase tracking reference signal (phase tracking reference signal, PTRS) port, a cell reference signal (cell reference signal, CRS) port, a time-frequency tracking reference signal (tracking reference signal, TRS) port, or a synchronization signal and physical broadcast channel block (synchronization signal and physical broadcast channel block, SSB) port) or an antenna port group, or may be represented by a resource (for example, a CSI-RS resource, an SRS resource, a DMRS resource, a PTRS resource, a CRS resource, a TRS resource, or an SSB resource) or a resource group, or may be represented by a channel (for example, a physical uplink control channel (physical uplink control channel, PUCCH), a physical uplink shared channel (physical uplink shared channel, PUSCH), a physical random access channel (physical random access channel, PRACH), a physical downlink shared channel (physical downlink shared channel, PDSCH), a physical downlink control channel (physical downlink control channel, PDCCH), or a physical broadcast channel (physical broadcast channel, PBCH)), or may be represented by a beam, a QCL, a TCI-state, a spatial relation, or an index configured in the QCL, the TCI-state, or the spatial relation, or may be represented by a beam group, a QCL group, a TCI-state group, a spatial relation group. This is not limited in embodiments of this application.

In the conventional technology, each beam corresponds to one pilot resource, and the communication device may obtain quality of the beam by measuring the pilot resource. For example, the beam is a transmission beam of the network device. After the network device configures the pilot resource for the terminal device, the terminal device measures the pilot resource to obtain a measurement value, and reports the measurement value to the network device. The network device may learn of, based on the measurement value, the quality of the beam corresponding to the pilot resource.

Currently, an increase in a quantity of beams increases processing load of the communication device. Therefore, in some related technologies, a large-array hybrid beamforming (hybrid beamforming, HBF) architecture is usually used, and the HBF architecture resolves a problem that a processing capability of the communication device is reduced because of an excessive quantity of beams. Specifically, analog beamforming is first performed on to-be-sent beams of the network device, and the to-be-sent beams are combined into a plurality of analog domain beams (also referred to as analog beams). Then, digital beamforming is performed on the plurality of analog domain beams, and the analog domain beams are combined into a plurality of digital domain beams (also referred to as digital beams). In this case, each analog beam corresponds to one pilot resource. For example, the pilot resource configured by the network device for the terminal device includes a resource set (resourceSet), and each resourceSet includes a plurality of resources (resources). The resource is the pilot resource corresponding to each analog beam, and each resource includes one or two pilot ports. The terminal device selects one to four resources and a measurement value corresponding to each resource based on measurement values obtained by measuring the plurality of resources, and reports the selected resources and the measurement value corresponding to each resource to the network device, so that the network device may learn of quality of the analog beam. It may be understood that if the resource includes one pilot port, the reported measurement value is a measurement value of the pilot port; or if the resource includes two pilot ports, the reported measurement value is an average value of measurement values of the two pilot ports.

However, a same analog beam includes a plurality of digital beams. In this case, different pilot resources need to be configured for different digital beams in the same analog beam. When the terminal device selects one to four pilot resources from the plurality of pilot resources for reporting, because the terminal device cannot sense a specific weighting manner (for example, an analog beamforming manner and a digital beamforming manner) of the pilot resources, the selected pilot resources may be based on different digital beams in the same analog beam. Consequently, effective measurement of different analog beams cannot be implemented.

To resolve the foregoing problem, this application provides a beam management method. Pilot resources used for beam management are grouped, pilot resources using a same analog beam are grouped into a same group, and pilot resources using different analog beams are grouped into different groups. Group-level measurement values are measured, and pilot resources are selected from different groups and reported to a network device, to implement analog beam measurement, selection, and reporting in an HBF architecture.

In embodiments of this application, a specific structure of an execution body of the beam management method is not specifically limited in embodiments of this application, provided that a program that records code of the beam management method in embodiments of this application can be run, to perform communication according to the beam management method in embodiments of this application. For example, the execution body of the beam management method provided in embodiments of this application may be a functional module that is in a network device and that can invoke a program and execute the program, or may be a communication apparatus, for example, a chip, used in the network device. The execution body of the beam management method provided in embodiments of this application may be a functional module that is in a terminal device and that can invoke a program and execute the program, or may be a communication apparatus, for example, a chip, used in the terminal device. This is not limited in this application.

FIG. 3 is a schematic flowchart of a beam management method according to an embodiment of this application. The method includes the following steps.

Step 301: A network device sends M pilot groups to a terminal device. Correspondingly, the terminal device receives the M pilot groups from the network device. Each of the M pilot groups corresponds to a plurality of pilot resources or a plurality of pilot ports, and M is a positive integer.

The pilot group is a group of pilots, for example, may be a group of pilot resource sets, or may be a group of pilot resources. One pilot group corresponds to one analog beam, or corresponds to a plurality of digital beams of one analog beam.

One pilot group corresponds to one analog beam, or corresponds to a plurality of digital beams of one analog beam.

For example, the network device sends three pilot groups to the terminal device: a pilot group 1, a pilot group 2, and a pilot group 3, and analog beams corresponding to the three pilot groups are respectively an analog beam 1, an analog beam 2, and an analog beam 3. When the pilot group 1 corresponds to three pilot resources, a pilot resource 1, a pilot resource 2, and a pilot resource 3 correspond to the analog beam 1, and respectively correspond to a digital beam 1, a digital beam 2, and a digital beam 3. Alternatively, when the pilot group 1 corresponds to three pilot ports, a pilot port 1, a pilot port 2, and a pilot port 3 correspond to the analog beam 1, and respectively correspond to a digital beam 1, a digital beam 2, and a digital beam 3.

The pilot resource may be a channel state information reference signal (channel state information reference signal, CSI-RS) resource, a sounding reference signal (sounding reference signal, SRS) resource, a demodulation reference signal (demodulation reference signal, DMRS) resource, a phase tracking reference signal (phase tracking reference signal, PTRS) resource, a cell reference signal (cell reference signal, CRS) resource, a time-frequency tracking reference signal (tracking reference signal, TRS) resource, a synchronization signal and physical broadcast channel block (synchronization signal and physical broadcast channel block, SSB) resource, or the like. This is not limited in embodiments of this application.

The pilot port may alternatively be a physical antenna, an antenna port, a reference signal port, a virtual port, or the like. The pilot port includes a CSI-RS port, an SRS port, a DMRS port, a PTRS port, a CRS port, a TRS port, an SSB port, and the like. This is not limited in embodiments of this application.

In a possible embodiment, the pilot group may be a pilot resource set (resourceSet) group, a pilot resource (resource) group, or a pilot port (port) group. When the pilot group is a pilot resource set group, each pilot group corresponds to a plurality of pilot resources. When the pilot group is a pilot port group, each pilot group corresponds to a plurality of pilot ports.

In an example, the network device configures a plurality of pilot resource sets for the terminal device, where each pilot resource set corresponds to one or more pilot resources. Pilots included in different pilot resource sets are sent by using different analog domain weights and a same digital domain weight or different digital domain weights. In other words, different pilot resource sets correspond to different analog beams. In one or more pilot resources in a same pilot resource set, pilots included in each pilot resource are sent by using a same analog domain weight and different digital domain weights. In other words, different pilot resources in the same pilot resource set correspond to a same analog beam and different digital beams.

For example, the network device configures four pilot resource sets: a resourceSet#1, a resourceSet#2, a resourceSet#3, and a resourceSet#4 for the terminal device, and each pilot resource set includes four pilot resources: a resource#1, a resource#2, a resource#3, and a resource#4. Analog beams corresponding to the resourceSet#1, the resourceSet#2, the resourceSet#3, and the resourceSet#4 are respectively an analog beam 1, an analog beam 2, an analog beam 3, and an analog beam 4. Pilots included in four pilot resources in the resourceSet#1 are sent by using a digital domain weight 1, a digital domain weight 2, a digital domain weight 3, and a digital domain weight 4 respectively. This is similar to pilot resources in the resourceSet#2, the resourceSet#3, and the resourceSet#4, and details are not described herein again.

It should be noted that, pilots included in four pilot resources in the resourceSet#2, the resourceSet#3, or the resourceSet#4 may be sent by using digital domain weights that are the same as or different from the digital domain weights used for the pilots included in the four pilot resources in the resourceSet#1. For example, the pilots included in the four pilot resources in the resourceSet#2 are also sent by using the digital domain weight 1, the digital domain weight 2, the digital domain weight 3, and the digital domain weight 4 respectively, or are sent by using the digital domain weight 4, a digital domain weight 5, a digital domain weight 6, and a digital domain weight 7. This is not limited in embodiments of this application.

In this embodiment of this application, the pilot resource set may be a channel state information-synchronization signal and physical broadcast channel block-resource set (channel state information-synchronization signal and physical broadcast channel block-resourceSet, CSI-SSB-resourceSet), a channel state information-interference measurement-resource set (channel state information-interference measurement-resourceSet, CSI-IM-resourceSet), a non-zero power-channel state information-reference signal-resource set (non-zero power-channel state information-reference signal-resourceSet, NZP-CSI-RS-resourceSet), or a zero power-channel state information-reference signal-resource set (zero power-channel state information-reference signal-resourceSet, ZP-CSI-RS-resourceSet). This is not limited in embodiments of this application.

In another example, the network device configures one pilot resource set including a plurality of pilot resources for the terminal device, where each pilot resource corresponds to a plurality of pilot ports. Pilots included in different pilot resources are sent by using different analog domain weights and a same digital domain weight or different digital domain weights. In other words, different pilot resources correspond to different analog beams. In one or more pilot ports in a same pilot resource, pilots included in each pilot port are sent by using a same analog domain weight and different digital domain weights. In other words, different pilot ports in the same pilot resource correspond to a same analog beam and different digital beams.

For example, the network device configures one pilot resource set resourceSet#1 for the terminal device, where the resourceSet#1 includes four pilot resources: a resource#1, a resource#2, a resource#3, and a resource#4, and each pilot resource includes four pilot ports: a port#1, a port#2, a port#3, and a port#4. Analog beams corresponding to the resource#1, the resource#2, the resource#3, and the resource#4 are respectively an analog beam 1, an analog beam 2, an analog beam 3, and an analog beam 4. Pilots included in four pilot ports in the resource#1 are sent by using a digital domain weight 1, a digital domain weight 2, a digital domain weight 3, and a digital domain weight 4 respectively. This is similar to pilot ports in the resource#2, the resource#3, and the resource#4, and details are not described herein again.

It should be noted that pilots included in four pilot resources in the resource#2, the resource#3, or the resource#4 may be sent by using digital domain weights that are the same as or different from the digital domain weights used for the pilots included in the four pilot ports in the resource#1. For example, the pilots included in the four pilot ports in the resource#2 are also sent by using the digital domain weight 1, the digital domain weight 2, the digital domain weight 3, and the digital domain weight 4 respectively, or are sent by using the digital domain weight 4, a digital domain weight 5, a digital domain weight 6, and a digital domain weight 7. This is not limited in embodiments of this application.

Optionally, when the pilot group is a pilot port group, polarization grouping is performed on a plurality of pilot ports included in each pilot resource. It may be understood that every two pilot ports correspond to one beam.

In an embodiment of this application, when the pilot group corresponds to L pilot ports, and L is an even number, that every two pilot ports form one group and correspond to one analog beam includes: A k^{th} pilot port and a (k+N/2)^{th} pilot port correspond to one group, where k is a positive integer; or a k^{th} pilot port and a (k+1)^{th} pilot port correspond to one group, where k is an odd number.

For example, the pilot resource resource#1 includes eight pilot ports: the port#1 to a port#8. The port#1 and the port#5 correspond to one analog beam, the port#2 and the port#6 correspond to one analog beam, the port#3 and the port#7 correspond to one analog beam, and the port#4 and the port#8 correspond to one analog beam. It may be understood as that, in the eight pilot ports, a first half of the pilot ports are for a same polarized beam, and a second half of the pilot ports are for another polarized beam. Alternatively, the port#1 and the port#2 correspond to one analog beam, the port#3 and the port#4 correspond to one analog beam, the port#5 and the port#6 correspond to one analog beam, and the port#7 and the port#8 correspond to one analog beam. It may be understood as that, in the eight pilot ports, pilot ports numbered odd are for a same polarized beam, and pilot ports numbered even are for another polarized beam.

In this embodiment of this application, the pilot resource may be a CSI-SSB-resource, a CSI-IM-resource, an NZP-CSI-RS-resource, or a ZP-CSI-RS-resource. This is not limited in embodiments of this application.

Step 302: The terminal device obtains a measurement value of each pilot group.

The measurement value represents channel state information of the pilot group, and the measurement value may be any one of a reference signal received power (reference signal received power, RSRP), reference signal received quality (reference signal received quality, RSRQ), or a signal to interference plus noise ratio (signal to interference plus noise ratio, SINR).

When each pilot group corresponds to one pilot resource set, the measurement value of the pilot group is a measurement value of the pilot resource set. When each pilot group corresponds to one pilot resource, the measurement value of the pilot group is a measurement value of the pilot resource.

In a possible embodiment of this application, when each pilot group corresponds to the plurality of pilot resources, determining the measurement value corresponding to each pilot group includes: The terminal device determines a measurement value of each of the plurality of pilot resources corresponding to each pilot group.

In an example, the terminal device measures a measurement value of each pilot resource based on a plurality of pilot resources in each pilot resource set, and then determines a measurement value of the pilot resource set based on the measurement value of each pilot resource.

It may be understood that the measurement value of the pilot resource set is determined based on the measurement values of the plurality of pilot resources in the pilot resource set. Specifically, the measurement value corresponding to each pilot group includes one or more of the following: an average value or a maximum value of the measurement values of the plurality of pilot resources; or an average value or a sum of first N measurement values among the measurement values of the plurality of pilot resources as sorted in a preset order, where N is a positive integer.

For example, the measurement value is the RSRP. The network device configures a plurality of pilot resource sets (resourceSet) for the terminal device, and each pilot resource set includes a plurality of pilot resources (resources). The terminal device calculates an RSRP of each pilot resource, and uses a largest RSRP in a same pilot resource set as an RSRP of the pilot resource set.

For example, the resourceSet#1 includes four pilot resources: the resource#1, the resource#2, the resource#3, and the resource#4. The terminal device calculates that RSRPs of the resource#1, the resource#2, the resource#3, and the resource#4 are respectively an RSRP1, an RSRP2, an RSRP3, and an RSRP4, compares the four RSRPs, and determines that the RSRP2 is the maximum value. In this case, the RSRP2 is used as an RSRP of the resourceSet#1.

For example, the measurement value is the RSRP. The network device configures a plurality of pilot resource sets (resourceSet) for the terminal device, and each pilot resource set includes a plurality of pilot resources (resources). The terminal device calculates an RSRP of each pilot resource, compares a plurality of RSRPs in a same pilot resource set, sorts the RSRPs in a preset order, selects first N largest RSRPs for averaging or summation, and uses an average or a sum as an RSRP of the pilot resource set.

For example, the resourceSet#1 includes four pilot resources: the resource#1, the resource#2, the resource#3, and the resource#4. The terminal device calculates that RSRPs of the resource#1, the resource#2, the resource#3, and the resource#4 are respectively an RSRP1, an RSRP2, an RSRP3, and an RSRP4, compares the four RSRPs, sorts the four RSRPs in a preset order (in descending order), and determines that RSRP1>RSRP2>RSRP4>RSRP3. N is set to 2. To be specific, first two RSRPs (the RSRP1 and the RSRP2) are averaged to obtain an RSRP*, and the RSRP* is used as an RSRP of the resourceSet#1; or the first two RSRPs are summed up to obtain an RSRP+, and the RSRP+ is used as an RSRP of the resourceSet#1.

It should be noted that the preset order may alternatively be an ascending order or another arrangement order. This is not limited in embodiments of this application.

Optionally, after calculating an RSRP of each pilot resource in a pilot resource set, the terminal device selects RSRPs of N pilot resources for averaging or summation, and uses an average or a sum as an RSRP of the pilot resource set. Numbers of N pilot resources selected from different pilot resource sets are the same.

For example, if RSRPs of the resource#1 and the resource#3 are selected from the resourceSet#1 for averaging or summation, RSRPs of the resource#1 and the resource#3 in the resourceSet#2 are also selected from the resourceSet#2 for averaging or summation.

It should be noted that a value of N may be configured by the network device, or may be determined by the terminal device. This is not limited in embodiments of this application.

Optionally, after calculating an RSRP of each pilot resource in a pilot resource set, the terminal device averages or sums up RSRPs of pilot resources with a same number in different pilot resource sets, and uses an average or a sum as an RSRP of the pilot resource.

For example, each of the resourceSet#1, the resourceSet#2, and the resourceSet#3 includes four pilot resources: the resource#1, the resource#2, the resource#3, and the resource#4. After calculating an RSRP of each pilot resource in each pilot resource set, the terminal device averages or sums up RSRPs of the resource#1 in the resourceSet#1, the resource#1 in the resourceSet#2, and the resource#1 in the resourceSet#3, and uses an average or a sum as an RSRP of the resource#1; or averages or sums up RSRPs of the resource#2 in the resourceSet#1, the resource#2 in the resourceSet#2, and the resource#2 in the resourceSet#3, and uses an average or a sum as an RSRP of the resource#2.

In another possible embodiment of this application, when each pilot group corresponds to the plurality of pilot ports, determining the measurement value corresponding to each pilot group includes: The terminal device determines a measurement value of each of the plurality of pilot ports corresponding to each pilot group.

In another example, the terminal device measures a measurement value of one or more pilot ports in each pilot resource based on the one or more pilot ports, and then determines a measurement value of the pilot resource based on the measurement value of the one or more pilot ports.

It may be understood that the measurement value of the pilot resource is determined based on measurement values of the plurality of pilot ports in the pilot resource. Specifically, the measurement value corresponding to each pilot group includes one or more of the following: an average value or a maximum value of the measurement values of the plurality of pilot ports; or an average value or a sum of first N measurement values among the measurement values of the plurality of pilot ports as sorted in a preset order, where N is a positive integer.

For example, the measurement value is the RSRP. The network device configures a pilot resource set (resourceSet) including a plurality of pilot resources (resources) for the terminal device, where each pilot resource includes a plurality of pilot ports (ports). The terminal device calculates an RSRP of each pilot port, and uses a largest RSRP in a same pilot resource as an RSRP of the pilot resource.

For example, the resource#1 includes four pilot ports: the port#1, the port#2, the port#3, and the port#4. The terminal device calculates that RSRPs of the port#1, the port#2, the port#3, and the port#4 are respectively an RSRP1, an RSRP2, an RSRP3, and an RSRP4, compares the four RSRPs, and determines that the RSRP2 is the maximum value. In this case, the RSRP2 is used as an RSRP of the resource#1.

For example, the measurement value is the RSRP. The network device configures a pilot resource set (resourceSet) including a plurality of pilot resources (resources) for the terminal device, where each pilot resource includes a plurality of pilot ports (ports). The terminal device calculates an RSRP of each pilot port, compares a plurality of RSRPs in a same pilot resource, sorts the plurality of RSRPs in a preset order, selects first N largest RSRPs for averaging or summation, and uses an average or a sum as an RSRP of the pilot resource.

For example, the resource#1 includes four pilot ports: the port#1, the port#2, the port#3, and the port#4. The terminal device calculates that RSRPs of the port#1, the port#2, the port#3, and the port#4 are respectively an RSRP1, an RSRP2, an RSRP3, and an RSRP4, compares the four RSRPs, sorts the four RSRPs in a preset order (for example, in descending order), and determines that RSRP1>RSRP2>RSRP4>RSRP3. N is set to 2. To be specific, first two RSRPs (the RSRP1 and the RSRP2) are averaged to obtain an RSRP*, and the RSRP* is used as an RSRP of the resource#1; or the first two RSRPs are summed up to obtain an RSRP+, and the RSRP+ is used as an RSRP of the resource#1.

Optionally, after calculating an RSRP of each pilot port in a pilot resource, the terminal device selects RSRPs of N pilot ports for averaging or summation, and uses an average or a sum as an RSRP of the pilot resource. Numbers of N pilot ports selected from different pilot resources are the same.

For example, if RSRPs of the port#1 and the port#3 are selected from the resource#1 for averaging or summation, RSRPs of the port#1 and the port#3 in the resource#2 are also selected from the resource#2 for averaging or summation.

Optionally, after calculating an RSRP of each pilot port in a pilot resource, the terminal device averages or sums up RSRPs of pilot ports with a same number in different pilot resources, and uses an average or a sum as an RSRP of the pilot port.

For example, each of the resource#1, the resource#2, and the resource#3 included in the resourceSet#1 includes four pilot ports: the port#1, the port#2, the port#3, and the port#4. After calculating an RSRP of each pilot port in each pilot resource, the terminal device averages or sums up RSRPs of the port#1 in the resource#1, the port#1 in the resource#2, and the port#1 in the resource#3, and uses an average or a sum as an RSRP of the port#1; or averages or sums up RSRPs of the port#2 in the resource#1, the port#2 in the resource#2, and the port#2 in the resource#3, and uses an average or a sum as an RSRP of the port#2.

It should be noted that reception beams used by the terminal device to receive pilot signals of different pilot resource sets, different pilot resources, or different pilot ports may be the same or may be different. This is not limited in embodiments of this application.

Step 303: The network device obtains a measurement value and an index value of at least one of the M pilot groups. Correspondingly, the terminal device reports the measurement value and the index value of the at least one of the M pilot groups to the network device.

The measurement value represents channel state information of the pilot group.

In an example, when the pilot group is a pilot resource group, a measurement value of the pilot group is a measurement value of a pilot resource set, or a measurement value of the pilot group is a joint measurement value of pilot resources with a same index in a plurality of pilot resource sets, and the terminal device reports a measurement value of each pilot resource set to the network device.

The following uses an example in which the network device configures four pilot resource sets: a resourceSet#0, a resourceSet#1, a resourceSet#2, and a resourceSet#3 for the terminal device, and each pilot resource set includes four pilot resources: a resource#0, a resource#1, a resource#2, and a resource#3 to describe reporting, by the terminal device to the network device, the measurement value corresponding to each pilot group.

Example 1: The terminal device selects same pilot resources (for example, selects the resource#0 in each pilot resource set) from different pilot resource sets to perform RSRP calculation, and uses an RSRP corresponding to the pilot resource (for example, an RSRP of the resource#0 in the resourceSet#0 is an RSRP0, an RSRP of the resource#0 in the resourceSet#1 is an RSRP1, an RSRP of the resource#0 in the resourceSet#2 is an RSRP2, and an RSRP of the resource#0 in the resourceSet#3 is an RSRP3) as an RSRP of the corresponding pilot resource set, and reports the RSRP to the network device. In other words, the RSRP0 is an RSRP of the resourceSet#0, the RSRP1 is an RSRP of the resourceSet#1, the RSRP2 is an RSRP of the resourceSet#2, and the RSRP3 is an RSRP of the resourceSet#3.

Example 2: An RSRP0 reported by the terminal device is an average value or a sum of RSRPs corresponding to the resource#0 in the resourceSet#0, the resource#0 in the resourceSet#1, the resource#0 in the resourceSet#2, and the resource#0 in the resourceSet#3. An RSRP1 is an average or a sum of RSRP measurement values corresponding to the resource#1 in the resourceSet#0, the resource#1 in the resourceSet#1, the resource#1 in the resourceSet#2, and the resource#1 in the resourceSet#3. An RSRP2 is an average or a sum of RSRP measurement values corresponding to the resource#2 in the resourceSet#0, the resource#2 in the resourceSet#1, the resource#2 in the resourceSet#2, and the resource#2 in the resourceSet#3. An RSRP3 is an average or a sum of RSRP measurement values corresponding to the resource#3 in the resourceSet#0, the resource#3 in the resourceSet#1, the resource#3 in the resourceSet#2, and the resource#3 in the resourceSet#3.

Example 3: An RSRP0 reported by the terminal device is an average value or a sum of RSRPs respectively corresponding to four pilot resources: the resource#0, the resource#1, the resource#2, and the resource#3 in the resourceSet#0. An RSRP1 is an average value or a sum of RSRPs respectively corresponding to four pilot resources: the resource#0, the resource#1, the resource#2, and the resource#3 in the resourceSet#1. An RSRP2 is an average value or a sum of RSRPs respectively corresponding to four pilot resources: the resource#0, the resource#1, the resource#2, and the resource#3 in the resourceSet#2. An RSRP3 is an average value or a sum of RSRPs respectively corresponding to four pilot resources: the resource#0, the resource#1, the resource#2, and the resource#3 in the resourceSet#3.

In another example, when the pilot group is a pilot port group, a measurement value of the pilot group is a measurement value of a pilot resource, and the terminal device reports a measurement value of at least one pilot group to the network device.

For example, the network device configures four pilot resources: a resource#0, a resource#1, a resource#2, and a resource#3 for the terminal device, and each pilot resource includes four pilot ports: a port#0, a port#1, a port#2, and a port#3. Specific examples are similar to those in Example 1, Example 2, and Example 3, and details are not described herein again.

The index value represents a pilot resource or a pilot port associated with the measurement value.

For example, when the pilot group corresponds to a plurality of pilot resources, the index value may represent a pilot resource set or a pilot resource associated with the measurement value; or when the pilot group corresponds to a plurality of pilot resources, the index value may represent a pilot resource or a pilot port associated with the measurement value.

In a possible implementation, the index value is associated with a measurement value of the pilot group, and each index value is associated with one or more measurement values, or a plurality of index values are associated with one measurement value.

Example 1 in the foregoing embodiment is used as an example. As shown in Table 1, a channel state information reference signal resource indicator (CSI-RS resource indicator, CRI) is an index value, and one index value is associated with a plurality of measurement values. The CRI is 0, indicating four measurement values: the RSRP0, the RSRP1, the RSRP2, and the RSRP3.

**Table 1**

| CRI | RSRP |
|---|---|
| 0 | RSRP0 (resourceSet#0-resource#0) |
| | RSRP1 (resourceSet#1-resource#0) |
| | RSRP2 (resourceSet#2-resource#0) |
| | RSRP3 (resourceSet#3-resource#0) |

Example 2 in the foregoing embodiment is used as an example. As shown in Table 2, one index value is associated with one measurement value. The CRI being 0 indicates the RSRP0. The CRI being 1 indicates the RSRP1. The CRI being 2 indicates the RSRP2. The CRI being 3 indicates the RSRP3. Alternatively, the index value is related to the number of a pilot resource. As shown in Table 3, an RSRP corresponding to the CRI being N0 is an RSRP corresponding to a resource#N0 in the resourceSet#0; an RSRP corresponding to the CRI being N1 is an RSRP corresponding to a resource#N1 in the resourceSet#1, and the rest may be deduced by analogy. Values of N0, N1, N2, and N3 may be the same or may be different.

**Table 2**

| CRI | RSRP |
|---|---|
| 0 | RSRP0 (resourceSet#0-resource#0+resourceSet#1-resource#0+...) |
| 1 | RSRP1 (resourceSet#0-resource#1+resourceSet#1-resource#1+...) |
| 2 | RSRP2 (resourceSet#0-resource#2+resourceSet#1-resource#2+...) |
| 3 | RSRP3 (resourceSet#0-resource#3+resourceSet#1-resource#3+...) |

**Table 3**

| CRI | RSRP |
|---|---|
| N0 | RSRP0 (resourceSet#0-resource#N0) |
| N1 | RSRP1 (resourceSet#0-resource#N1) |
| N2 | RSRP2 (resourceSet#0-resource#N2) |
| N3 | RSRP3 (resourceSet#0-resource#N3) |

Example 3 in the foregoing embodiment is used as an example. A plurality of index values are related to numbers of pilot resources in the pilot resource set. As shown in Table 4, CRIs are 0, 1, 2, and 3, and the RSRP0 is an average value or a sum of RSRPs respectively corresponding to the resource#0, the resource#1, the resource#2 and the resource#3 in the resourceSet#0 (the sum is used as an example in Table 4).

**Table 4**

| CRI | RSRP |
|---|---|
| 0, 1, 2, and 3 | RSRP0 (resourceSet#0-(resource#0+resource#1+resource#2+resource#3)) |
| | RSRP1 (resourceSet#1-(resource#0+resource#1+resource#2+resource#3)) |
| | RSRP2 (resourceSet#2-(resource#0+resource#1+resource#2+resource#3)) |
| | RSRP3 (resourceSet#3-(resource#0+resource#1+resource#2+resource#3)) |

In this application, the network device sends a plurality of pilot groups to the terminal device, where different pilot groups correspond to different analog beams, and each of the plurality of pilot groups corresponds to a plurality of pilot resources or a plurality of pilot ports. The terminal device calculates a measurement value for each pilot group and reports the measurement value corresponding to the at least one pilot group to the network device. Since analog beams of different pilot groups are different, measurement and reporting of different analog beams can be implemented, thereby enabling the terminal device to sense different analog beams and improving communication performance of the multi-user system.

Step 304: The network device sends spatial domain reception indication information of a downlink signal to the terminal device based on the measurement value corresponding to the at least one pilot group, as reported by the terminal device. Correspondingly, the terminal device receives the spatial domain reception indication information of the downlink signal from the network device.

The spatial domain reception indication information indicates the reception beam reference for downlink signal reception by the terminal device.

In an example, the network device sends TCI information to the terminal device based on the measurement value corresponding to each pilot group, where the TCI information is associated with identification information of the pilot group. The terminal device determines its reception beam based on the TCI information. Specifically, it maintains different reception beams for different analog beams, and the same reception beam for the same analog beam with different digital beams. The identification information of the pilot group associated with the TCI may be a pilot resource set ID (for example, the resourceSet#0), a pilot resource ID (for example, the resource#1), or a pilot port ID (for example, the port#2).

In a possible implementation, the TCI information is a TCI-state. The network device indicates the TCI-state by using a TCI field in downlink control information (downlink control information, DCI).

For example, the size of the TCI field is 3 bits (bits), representing eight different field values (codepoints). Each field value corresponds to a TCI-state index, which uniquely identifies a TCI-state.

In a possible embodiment of this application, the spatial domain reception indication information includes a local index. The local index indicates a pilot group that is reported by the terminal device and used as a reference for spatial domain reception of the downlink signal.

In an example, the network device receives measurement values of a plurality of pilot groups reported by the terminal device. In the spatial domain reception indication information sent to the terminal device, the 1^{st} local index is associated with the 1^{st} pilot group reported by the terminal device, the 2^{nd} local index is associated with the 2^{nd} pilot group reported by the terminal device, and so on. One pilot group corresponds to one analog beam or to a plurality of digital beams of the same analog beam.

For example, the local index being 0 indicates that the downlink signal is received with reference to the 1^{st} pilot group reported by the terminal device, and the local index being 1 indicates that the downlink signal is received with reference to the 2^{nd} pilot group reported by the terminal device.

In a possible embodiment, each TCI-state includes one index (tci-StateId) and two pieces of quasi co-location information (QCL-Info). Each piece of QCL-Info includes a cell (cell) field and a bandwidth part (bandwidth, BWP) identifier, and indicates a specific BWP in a specific cell to which the TCI-state is applied. The QCL-Info further includes a reference signal for indicating a specific reference signal resource with which a QCL relationship is formed. The QCL relationship means that two reference signal resources have a same spatial parameter. The QCL-Info further includes qcl-Type, used to determine a same spatial parameter. The qcl-Type may have four values: typeA, typeB, typeC, and typeD, where typeD indicates that two reference signal resources have same spatial reception parameter information, that is, two beams have a same reception beam.

In a possible implementation, a specific process in which the network device indicates, by using the TCI-state, the terminal device to determine the reception beam includes TCI-state configuration, TCI-state activation, and TCI-state indication.

First, the network device configures eight TCI-states for the terminal device by using resource control (radio resource control, RRC) signaling. Each of the eight TCI-states includes one piece of QCL-Info in which a type is typeD. It may be understood that the network device may alternatively configure a TCI-state that does not include QCL-Info in which a type is typeD. This is not limited in embodiments of this application.

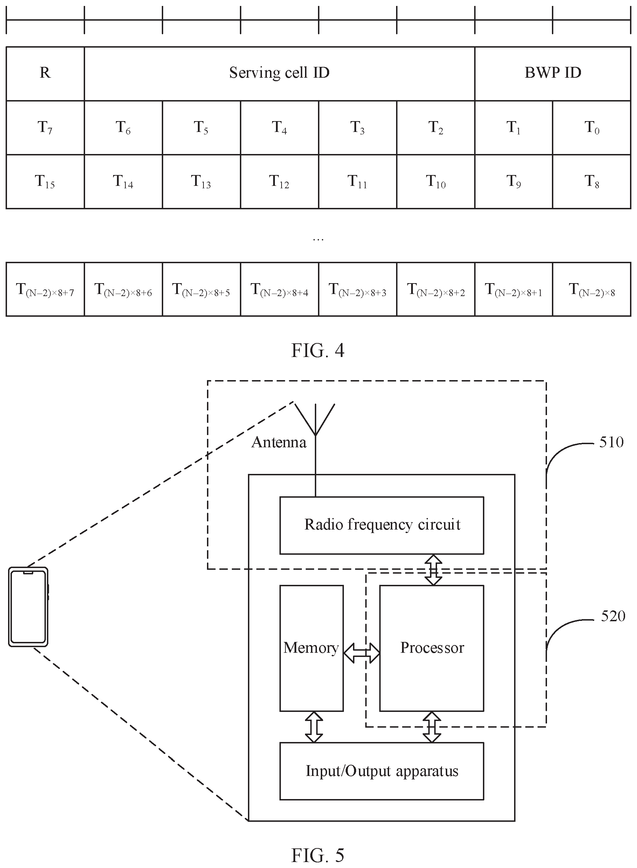

Then, after configuring the plurality of TCI-states, the network device activates the eight TCI-states by using a medium access control-control element (medium access control-control element, MAC-CE). The eight TCI-states are in one-to-one correspondence with eight values of the TCI field in the DCI. FIG. 4 is a diagram of a structure of a MAC-CE for activating the TCI-state. Fields T0 to T(N-2)×8+7 respectively correspond to TCI-states whose configured indexes are respectively 0 to (N-2)×8+7. A size of each field is 1 bit, and a value of the field is 0 or 1. When the value of the field is 1, it indicates to activate the TCI-state. When the value of the field is 0, it indicates not to activate the TCI-state. Each MAC-CE may have eight activation fields whose values are 1, and the others are all 0. The eight TCI-states corresponding to field values 1 are those corresponding to the eight values of the TCI field in the DCI. For example, a minimum value 000 of the TCI field corresponds to an activated TCI-state with a minimum index in the MAC-CE.

It should be noted that the MAC-CE has another function in addition to TCI-state activation, and details are not described herein.

Finally, the network device indicates a specific TCI-state by using the TCI field in the DCI. For example, a value of the TCI field in the DCI sent by the network device to the terminal device is 000, indicating that a TCI-state corresponding to 000 is used for the beam. A reference signal included in the QCL-Info in which a type is typeD in the TCI-state is a channel state information reference signal (channel state information reference signal, CSI-RS) whose index is #1, indicating that the beam is the same as a reception beam corresponding to the CSI-RS whose index is #1.

The reception beam corresponding to the CSI-RS whose index is #1 is determined by the terminal device through measurement. Therefore, the terminal device may determine a corresponding reception beam based on a specific value of the TCI field, and receive data by using the corresponding reception beam.

Optionally, in a beam management pilot measurement phase, the terminal device maintains two types of reception beams for each analog beam. A first type is a common reception beam, that is, different analog beams are received by using a same reception beam. A second type is a dedicated reception beam, that is, a corresponding reception beam is independently maintained for each analog beam, and reception beams corresponding to different analog beams may be the same or may be different.

In a possible implementation, the network device indicates, depending on whether a value of pilot group information (for example, a pilot resource set identifier, a pilot resource identifier, a pilot port identifier, or a beam index identifier) is valid, a reception beam set that needs to be used by the terminal device. For example, when the pilot group information associated with the TCI is a valid value, and the pilot group information configured by the network device for the terminal device includes the value, the dedicated reception beam of the analog beam is used. When the pilot group information associated with the TCI is an invalid value, that is, the pilot group information configured by the network device for the terminal device does not include the value, the common reception beam is used.

In another possible implementation, the network device configures reservation indication information for the terminal device, where the reservation indication information indicates a type of a reception beam to be used by the terminal device. For example, 0 indicates to perform receiving by using the common reception beam, and 1 indicates to receive each analog beam by using a dedicated reception beam.

In the foregoing embodiments, downlink transmission is used as an example to describe an implementation in which the network device configures the plurality of pilot groups and the spatial domain reception indication information for the terminal device. It may be understood that, in uplink transmission, a specific implementation is similar. A transmission beam for uplink transmission is indicated by a spatial relation (spatial relation). Similar to the TCI-state, the spatial relation is used to determine a transmission beam to be used by the terminal device.

In a possible implementation, the network device configures the spatial relation for the terminal device by using RRC signaling. The spatial relation includes identification information of the spatial relation, identification information of a cell, a pilot resource, a path loss measurement reference signal, a power control parameter, and the like. The pilot resource indicates a corresponding uplink beam. A spatial relation#1 is used for uplink transmission, and the spatial relation#1 includes a pilot resource#2, indicating that a transmission beam used for uplink transmission is a transmission beam or a reception beam of the pilot resource#2.

For example, when the pilot resource is an SRS, it indicates that the transmission beam used for uplink transmission is a transmission beam of the SRS. For another example, when the pilot resource is an SSB/a CSI-RS, it indicates that the transmission beam used for uplink transmission is a reception beam of the SSB/CSI-RS.

It may be understood that the network device may configure a plurality of spatial relations for the terminal device, and then activate one of the plurality of spatial relations by using the MAC-CE, for data transmission. For example, a physical uplink control channel (physical uplink control channel, PUCCH), a physical uplink shared channel (physical uplink shared channel, PUSCH), an SRS, and the like included in uplink transmission each need a corresponding spatial relation. Spatial relations of the PUCCH and the SRS are indicated by using MAC-CE signaling. During transmission, the PUSCH is associated with a specific SRS, and is transmitted based on a spatial relation of the SRS.

The foregoing mainly describes the solutions in embodiments of this application from a perspective of interaction between network elements. It may be understood that to implement the foregoing functions, the network elements such as a communication apparatus include corresponding structures and/or software modules for executing the functions. A person skilled in the art should be easily aware that, in combination with units and algorithm steps of the examples described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

An embodiment of this application provides a beam management apparatus. The apparatus includes a transceiver, a memory, a processor, and a computer program that is stored in the memory and that is runnable on the processor. When the processor executes the computer program, the apparatus is configured to implement the beam processing method in the foregoing embodiments.

An embodiment of this application provides a communication apparatus. The communication apparatus may be a terminal device or a chip. The communication apparatus may be configured to execute the foregoing method embodiments.

When the communication apparatus is a terminal device, FIG. 5 is a simplified diagram of a structure of the terminal device. For ease of understanding and illustration, an example in which the terminal device is a mobile phone is used in FIG. 5. As shown in FIG. 5, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user. It should be noted that some types of terminal devices may have no input/output apparatus.

When needing to send data, after performing baseband processing on to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 5 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have receiving and sending functions may be considered as a transceiver unit of the terminal device, and the processor that has a processing function may be considered as a processing unit of the terminal device.

As shown in FIG. 5, the terminal device includes a transceiver unit 510 and a processing unit 520. The transceiver unit 510 may also be referred to as a transceiver, a transceiver machine, a transceiver apparatus, or the like. The processing unit 520 may also be referred to as a processor, a processing board, a processing module, a processing apparatus, or the like. Optionally, a device that is in the transceiver unit 510 and that is configured to implement a receiving function may be considered as a receiving unit, and a device that is in the transceiver unit 510 and that is configured to implement a sending function may be considered as a sending unit. In other words, the transceiver unit 510 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that FIG. 5 is merely an example rather than a limitation. The terminal device including the transceiver unit and the processing unit may not depend on the structure shown in FIG. 5.

When the communication apparatus is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a communication apparatus. The communication apparatus may be a network device or a chip. The communication apparatus may be configured to execute the foregoing method embodiments. When the communication apparatus is a network device, for example, a base station,

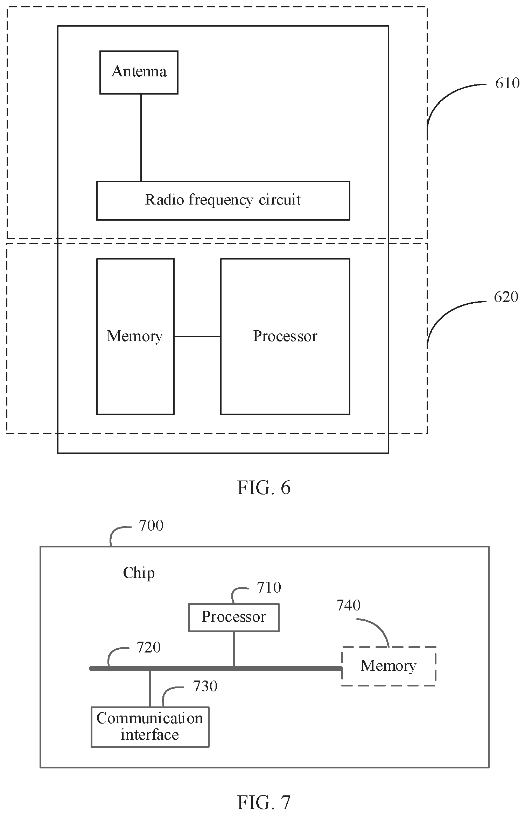

FIG. 6 is a simplified diagram of a structure of the base station. The base station includes a part 610 and a part 620. The part 610 is mainly configured to receive and send radio frequency signals and perform conversion between a radio frequency signal and a baseband signal. The part 620 is mainly configured to: perform baseband processing, control the base station, and the like. The part 610 may be usually referred to as a transceiver unit, a transceiver machine, a transceiver circuit, a transceiver, or the like. The part 620 is usually a control center of the base station, may be usually referred to as a processing unit, and is configured to control the base station to perform a processing operation on a network device side in the foregoing method embodiments.

The transceiver unit of the part 610 may also be referred to as a transceiver machine, a transceiver, or the like, and includes an antenna and a radio frequency unit. The radio frequency unit is mainly configured to perform radio frequency processing. Optionally, in the part 610, a device that is configured to implement a receiving function may be considered as a receiving unit, and a device that is configured to implement a sending function may be considered as a sending unit. In other words, the part 610 includes the receiving unit and the sending unit. The receiving unit may also be referred to as a receiver machine, a receiver, a receiver circuit, or the like. The sending unit may be referred to as a transmitter machine, a transmitter, a transmitter circuit, or the like.

The part 620 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

It should be understood that FIG. 6 is merely an example rather than a limitation. The network device including the transceiver unit and the processing unit may not depend on the structure shown in FIG. 6.

FIG. 7 is a diagram of a structure of a chip 700 according to an embodiment of this application. The chip 700 includes one or two or more (including two) processors 710 and a communication interface 730.

Optionally, the chip 700 further includes a memory 740, and the memory 740 may include a read-only memory and a random access memory and provide operation instructions and data for the processor 710. A part of the memory 740 may further include a non-volatile random access memory (non-volatile random access memory, NVRAM).

In some implementations, the memory 740 stores the following elements, an execution module or a data structure, a subset thereof, or an extended set thereof.

In this embodiment of this application, a corresponding operation is performed by invoking the operation instructions stored in the memory 740 (the operation instructions may be stored in an operating system).

The processor 710 controls a processing operation of either of the first terminal and the base station, and the processor 710 may also be referred to as a central processing unit (central processing unit, CPU).

The memory 740 may include a read-only memory and a random access memory, and provide instructions and data to the processor 710. A part of the memory 740 may further include an NVRAM. For example, during application, the memory 740, the communication interface 730, and the memory 740 are coupled together through a bus system 720. In addition to a data bus, the bus system 720 may further include a power bus, a control bus, a status signal bus, and the like. However, for clear description, various buses are marked as the bus system 720 in FIG. 7.

The methods disclosed in the foregoing embodiments of this application may be applied to the processor 710, or may be implemented by the processor 710. The processor 710 may be an integrated circuit chip, and has a signal processing capability. In an implementation process, the steps in the foregoing methods can be completed by using a hardware integrated logic circuit in the processor 710, or by using instructions in a form of software. The processor 710 may be a general-purpose processor, a digital signal processor (digital signal processor, DSP), an ASIC, a field programmable gate array (field programmable gate array, FPGA) or another programmable logic device, a discrete gate, a transistor logic device, or a discrete hardware component. The methods, the steps, and logical block diagrams that are disclosed in embodiments of this application may be implemented or performed. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory 740, and the processor 710 reads information in the memory 740 and completes the steps in the foregoing methods in combination with hardware of the processor.

The communication unit may be a communication interface of the apparatus, and is configured to receive a signal from another apparatus. For example, when the apparatus is implemented as a chip, the communication unit is a communication interface used by the chip to receive a signal from or send a signal to another chip or apparatus.

An embodiment of this application further provides a computer-readable storage medium. The computer-readable storage medium stores a computer program. When the computer program is executed by a computer, the computer is enabled to implement the foregoing method embodiments.

An embodiment of this application further provides a computer program product including instructions. When the instructions are executed by a computer, the computer is enabled to implement the foregoing method embodiments.

For explanations and beneficial effect of related content in any one of the communication apparatuses provided above, refer to the corresponding method embodiments provided above. Details are not described herein again.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application may cover a computer program that can be accessed from any computer-readable device, carrier, or medium. For example, the computer-readable medium may include but is not limited to: a magnetic storage device (for example, a hard disk, a floppy disk, or a magnetic tape), an optical disc (for example, a compact disc (compact disc, CD) and a digital versatile disc (digital versatile disc, DVD)), a smart card, and a flash memory device (for example, an erasable programmable read-only memory (erasable programmable read-only memory, EPROM), a card, a stick, or a key driver). In addition, various storage media described in this specification may indicate one or more devices and/or other machine-readable media that are configured to store information. The term "machine-readable media" may include but is not limited to a wireless channel, and various other media that can store, include, and/or carry instructions and/or data.

It should be understood that, the processor mentioned in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) is integrated into the processor.

It should be noted that the memory described in this specification aims to include but is not limited to these memories and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A beam management method, wherein the method comprises:
sending M pilot groups to a terminal device, wherein each of the M pilot groups corresponds to a plurality of pilot resources or a plurality of pilot ports, and M is a positive integer; and
obtaining a measurement value and an index value of at least one of the M pilot groups, wherein the measurement value represents channel state information of the pilot group, and the index value represents the pilot resource or the pilot port associated with the measurement value.

2. The method according to claim 1, wherein each index value is associated with one or more measurement values, or a plurality of index values are associated with one measurement value.

3. The method according to claim 1, wherein when each pilot group corresponds to the plurality of pilot resources, obtaining a measurement value corresponding to each pilot group comprises:
obtaining a measurement value of each of the plurality of pilot resources corresponding to each pilot group.

4. The method according to claim 3, wherein the measurement value corresponding to each pilot group comprises one or more of the following:
an average value or a maximum value of measurement values of the plurality of pilot resources; or
an average value or a sum of first N measurement values among measurement values of the plurality of pilot resources as sorted in a preset order, wherein N is a positive integer.

5. The method according to claim 1, wherein when each pilot group corresponds to the plurality of pilot ports, obtaining a measurement value corresponding to each pilot group comprises:
obtaining a measurement value of each of the plurality of pilot ports corresponding to each pilot group.

6. The method according to claim 5, wherein the measurement value corresponding to each pilot group comprises one or more of the following:
an average value or a maximum value of measurement values of the plurality of pilot ports; or
an average value or a sum of first N measurement values among measurement values of the plurality of pilot ports as sorted in a preset order, wherein N is a positive integer.

7. The method according to claim 5 or 6, wherein when the pilot group corresponds to L pilot ports, and L is an even number, that every two pilot ports form one group comprises:
a k^{th} pilot port and a (k+N/2)^{th} pilot port correspond to one group, wherein k is a positive integer; or
a k^{th} pilot port and a (k+1)^{th} pilot port correspond to one group, wherein k is an odd number.

8. The method according to any one of claims 1 to 7, wherein the method further comprises:
sending spatial domain reception indication information of a downlink signal to the terminal device, wherein the spatial domain reception indication information is associated with the at least one pilot group.

9. The method according to claim 8, wherein the indication information comprises a local index, and the local index indicates the pilot group referenced for spatial domain reception of the downlink signal.

10. A beam management method, wherein the method comprises:
receiving M pilot groups from a network device, wherein each of the M pilot groups corresponds to a plurality of pilot resources or a plurality of pilot ports, and M is a positive integer;
determining a measurement value of at least one of the M pilot groups, wherein the measurement value represents channel state information of the pilot group; and
reporting the measurement value and an index value of the at least one of the M pilot groups to the network device, wherein the index value represents the pilot resource or the pilot port associated with the measurement value.

11. The method according to claim 10, wherein each index value is associated with one or more measurement values, or a plurality of index values are associated with one measurement value.

12. The method according to claim 10, wherein when each pilot group corresponds to the plurality of pilot resources, obtaining a measurement value of each pilot group comprises:
determining a measurement value of each of the plurality of pilot resources corresponding to each pilot group.

13. The method according to claim 12, wherein the measurement value corresponding to each pilot group comprises one or more of the following:
an average value or a maximum value of measurement values of the plurality of pilot resources; or
an average value or a sum of first N measurement values among measurement values of the plurality of pilot resources as sorted in a preset order, wherein N is a positive integer.

14. The method according to claim 10, wherein when each pilot group corresponds to the plurality of pilot ports, determining a measurement value of each pilot group comprises:
determining a measurement value of each of the plurality of pilot ports corresponding to each pilot group.

15. The method according to claim 14, wherein the measurement value corresponding to each pilot group comprises one or more of the following:
an average value or a maximum value of measurement values of the plurality of pilot ports; or
an average value or a sum of first N largest measurement values among measurement values of the plurality of pilot ports, wherein N is a positive integer.

16. The method according to claim 14 or 15, wherein when the pilot group corresponds to L pilot ports, and L is an even number, that every two pilot ports form one group comprises:
a k^{th} pilot port and a (k+N/2)^{th} pilot port correspond to one group, wherein k is a positive integer; or
a k^{th} pilot port and a (k+1)^{th} pilot port correspond to one group, wherein k is an odd number.

17. The method according to any one of claims 10 to 16, wherein the method further comprises:
obtaining spatial domain reception indication information of a downlink signal, wherein the spatial domain reception indication information is associated with the at least one pilot group.

18. The method according to claim 17, wherein the spatial domain reception indication information comprises a local index, and the local index indicates the pilot group referenced for spatial domain reception of the downlink signal.

19. A communication apparatus, wherein the apparatus comprises a transceiver, a memory, a processor, and a computer program that is stored in the memory and that is runnable on the processor; and
when the processor executes the computer program, the apparatus is configured to implement the method according to any one of claims 1 to 9 or the method according to any one of claims 10 to 18.

20. A chip, wherein the chip comprises a processor and a communication interface, the communication interface is coupled to the processor, and the processor is configured to run a computer program or instructions, to implement the method according to any one of claims 1 to 9 or the method according to any one of claims 10 to 18; and
the communication interface is configured to communicate with a module other than the chip.

21. A computer-readable storage medium, comprising computer instructions, wherein when the computer instructions are run on a base station, the base station performs the method according to any one of claims 1 to 9, or performs the method according to any one of claims 10 to 18.

22. A communication apparatus, comprising a unit configured to implement the method according to any one of claims 1 to 9 or a unit configured to implement the method according to any one of claims 10 to 18.
